# EUROPÄISCHE PATENTSCHRIFT

(11) **EP 2 104 560 B1**
(45) Veröffentlichungstag und Bekanntmachung des Hinweises auf die Patenterteilung: **20.03.2013**
(21) Anmeldenummer: 07820647.1
(22) Anmeldetag: 27.09.2007
(51) Int. Cl.: B01J 20/34

(54) **VERFAHREN ZUR REGENERATION VON ADSORBERHARZEN**
PROCESS FOR THE REGENERATION OF ADSORBER RESINS
PROCÉDÉ DE RÉGÉNÉRATION DE RÉSINES ABSORBANTES

(30) Priorität: 14.12.2006 DE 102006059463
(43) Veröffentlichungstag der Anmeldung: 30.09.2009
(73) Patentinhaber: BK Giulini GmbH, 67065 Ludwigshafen (DE)
(72) Erfinder: TEMME, Andreas, 40764 Langenfeld (DE); KALKER, Birgit, 50767 Köln (DE); MAUER, Dieter, 51381 Leverkusen (DE)
(86) Internationale Anmeldenummer: PCT/EP2007/060257
(87) Internationale Veröffentlichungsnummer: WO 2008/071471

(56) Entgegenhaltungen:
- EP-A- 0 407 952
- EP-A- 0 432 787
- DE-A1- 4 204 573
- DE-A1- 10 110 855
- US-A1- 2002 111 284

## Beschreibung

Die vorliegende Erfindung betrifft ein Verfahren zum Regenerieren eines mit Tensiden wie in Anspruch 1 definiert beladenen Adsorberharzes. Die Beladung des Adsorberharzes erfolgt dabei durch Binden von Tensiden aus Wasser, organischen Lösungsmitteln oder Mischungen hiervon. Beispielsweise erfolgt die Beladung des Adsorberharzes bei der Aufbereitung von Brauch-, Prozess- oder Abwasser: Hierbei wird das mit Tensiden belastete Wasser über das Adsorberharz geleitet, wobei die Tensiden durch das Adsorberharz gebunden werden. Das Adsorberharz wird nach der Beladung dadurch regeneriert, dass man es mit einem organischen Lösungsmittel spült.

Eine Wasseraufbereitung durch Binden organischer Verunreinigungen an Adsorberharze ist im Stand der Technik bekannt. Beispielsweise beschreibt DE-A-4204573 ein Verfahren zur Reinigung kontaminierter Grund-, Sicker-, Boden-Wasch- und Oberflächenwässer auf adsorptivem Wege, wobei man zur Reinigung ein im trockenen Zustand mit Wasser benetzbares mikroporöses polymeres Adsorbens auf der Basis Stryol/Divinylbenzol-Copolymer verwendet. Das beladene Adsorberharz kann, vorzugsweise im Temperaturbereich von 100 bis 180°C, durch Durchleiten eines Fluids, wie beispielsweise Luft, Gas, Wasser, Dampf oder ein organisches Lösungsmittel regeneriert werden. Laut Offenbarung dieses Dokuments eignen sich als Lösungsmittel insbesondere mit Wasser mischbare organische Lösungsmittel wie beispielsweise Alkohole, Carbonsäuren und Ketone, aber auch mit Wasser nicht bzw. nur begrenzt mischbare Lösungsmittel wie beispielsweise Benzin oder Halogenkohlenwasserstoffe. EP-A-432787 beschreibt ebenfalls ein Verfahren zum Entfernen wasserlöslicher organischer Verbindungen aus Prozesswasser. Als Adsorberharz wird vorzugsweise ebenfalls ein mit Divinylbenzol vernetztes Polystyrol eingesetzt. Das beladene Adsorberharz kann durch ein übliches organisches Lösungsmittel oder Lösungsmittelgemisch regeneriert werden. Beispielsweise genannt werden Aceton, Isopropanol, Ethanol und Methanol.

Weiterhin ist in der Praxis bekannt, Adsorberharze dadurch zu regenerieren, dass man die adsorbierten organischen Moleküle oxidativ zerstört, beispielsweise durch Überleiten von Wasserstoffperoxid.

Eine Regeneration mit Wasserstoffperoxid hat den Nachteil, dass hierbei eine gefährliche Chemikalie von chemisch ungeschultem Personal gehandhabt werden muss. Dies bringt Probleme hinsichtlich Arbeitsschutzes mit sich. Die Verwendung der vorstehend genannten organischen Lösungsmittel wie beispielsweise niedere Alkohole, insbesondere Methanol, oder Aceton hat den Nachteil, dass leicht flüchtige Stoffe mit niedrig liegendem Flammpunkt eingesetzt werden. Auch dies bringt Probleme hinsichtlich Arbeitsschutzes mit sich. Die leichte Flüchtigkeit dieser Lösungsmittel führt zur Belastung der Luft mit flüchtigen organischen Verbindungen, so fem nicht apparativ aufwändige Maßnahmen getroffen werden, eine solche Belastung zu vermeiden.

Daher besteht ein Bedarf nach alternativen Verfahren zur Regeneration von mit organischen Molekülen beladenen Adsorberharzen, die die genannten Nachteile vermeiden.

Der Gegenstand der vorliegenden Erfindung ist ein Verfahren zum Regenerieren eines mit Tensiden gemäß Anspruch 1 beladenen Adsorberharzes, wobei man das Adsorberharz mit einem organischen Lösungsmittel spült, das zu mindestenes 70 Gew.-% aus einem oder mehreren Alkylencarbonaten besteht. Der Rest zu 100 % kann beispielsweise aus in dem Alkylencarbonat gelöstem Wasser oder anderen organischen Lösungsmitteln wie beispielsweise Alkoholen mit 2 bis 4 Kohlenstoffatomen oder Glykolen bestehen.

Vorzugsweise besteht das organische Lösungsmittel zumindest aus 80 Gew.-% und insbesondere zumindest aus 90 Gew.-% aus einem oder mehreren Alkylencarbonaten. Besonders bevorzugt ist der Einsatz eines organischen Lösungsmittels, das nur aus einem oder mehreren Alkylencarbonaten besteht. Prozessbedingte Verunreinigungen durch Wasser oder andere Lösungsmittel lassen sich jedoch selten vermeiden, insbesondere wenn man als organisches Lösungsmittel eines oder mehrere Alkylencarbonate einsetzt, die in dem erfindungsgemäßen Verfahren bereits einmal verwendet worden waren und wieder aufbereitet wurden.

Als Alkylencarbonat ist beispielsweise Ethylencarbonat verwendbar. Setzt man dieses ein, ist es bevorzugt, es zu erwärmen und/oder mit anderen Alkylencarbonaten zu vermischen. Vorzugsweise setzt man jedoch Alkylencarbonate ein, die mindestens 3C-Atome in der Alkylengruppe aufweisen, wie beispielsweise Propylencarbonat oder Butylencarbonat.

Durch Mischen mehrerer Alkylencarbonate und/oder durch Zusatz bis zu 30 Gew.-% anderer organischer Lösungsmittel kann die Viskosität so eingestellt werden, dass das Regeneriermittel in wirtschaftlich vernünftigen Zeiten durch das Adsorberharz fließen kann. Eine Erhöhung der Temperatur über Zimmertemperatur hinaus führt ebenfalls zu diesem erwünschten Effekt der Viskositätserniedrigung. Außerdem wird durch Temperaturerhöhung der Desorptionsprozess beschleunigt, so dass das Adsorberharz in kürzeren Zeiten regeneriert werden kann. Dabei ist die Temperatur nach oben durch den Flammpunkt des verwendeten organischen Lösungsmitels beschränkt. Vorzugsweise soll die Temperatur so gewählt werden, dass sie den Flammpunkt des verwendeten organischen Lösungsmitels um mindestens 15°C unterschreitet. Demgemäß führt man die Regeneration vorzugsweise bei einer Temperatur im Bereich von 15°C bis zu einer Temperatur, die um 15°C unter dem Flammpunkt des verwendeten organischen Lösungsmittels liegt, durch.

Als Adsorberharze können solche Harze verwendet werden, die im Stand der Technik für die Bindung organischer Verunreinigungen aus Wasser oder niedermolekularen organischen Lösungsmitteln bekannt sind und in der Praxis hierfür eingesetzt werden. Beispielsweise ist das im vorstehend zitierten Stand der Technik genannte mit Divinylbenzol vernetzte Polystyrol geeignet. Vorzugsweise setzt man Adsorberharze ein, die eine solche Porosität aufweisen, dass die spezifische Oberfläche des Adsorberharzes, beispielsweise bestimmbar nach der BET-Methode unter Verwendung von Stickstoff, im Bereich von 500 bis 1500 m²/g liegt. Insbesondere sind Adsorberharze geeignet, die eine spezifische Oberfläche im Bereich von 700 bis 900 m²/g aufweisen. Derartige Adsorberharze sind kommerziell erhältlich.

Die mit dem erfindungsgemäßen Verfahren zu regenerierenden Adsorberharze können bei unterschiedlichen technischen Prozessen mit organischen Molekülen beladen worden sein. Beispielsweise kann die Beladung durch Aufbereiten von Brauch-, Prozess- oder Abwasser erfolgen, wobei dieses Wasser über das Adsorberharz geleitet wird, um gelöste organische Moleküle aus dem Wasser zu entfernen. Beispielsweise kann es sich um Abwasser handeln, das in der petrochemischen Industrie anfällt. Weiterhin kann es sich beispielsweise um Abwasser aus technischen Reinigungsprozessen handeln. Ein spezielles Beispiel hierfür ist Abwasser, das bei der technischen Reinigung von Metalloberflächen aus der metallverarbeiteten Industrie wie beispielsweise dem Fahrzeugbau anfällt.

Bei derartigen Prozessen wird das Abwasser vorwiegend mit organischen Molekülen verunreinigt, die eine Molmasse von oberhalb 70, insbesondere von oberhalb 100 und ganz besonders von oberhalb 150, jedoch in der Regel von weniger als 2000 aufweisen. Speziell können diese organischen Moleküle mindestens eine unverzweigte oder verzweigte Kohlenstoffkette aus mindestens 6 C-Atomen aufweisen. Insbesondere kann es sich bei den organischen Molekülen um Tenside handeln, die bei der technischen Reinigung eingesetzt werden und hierbei in das Abwasser gelangen.

Demgemäß ist das erfindungsgemäße Verfahren auf die Regeneration von Adsorberharzen gerichtet die mit organischen Molekülen beladen sind, die eine Molmasse von oberhalb 70, vorzugsweise von oberhalb 100 und insbesondere von oberhalb 150 jedoch vorzugsweise von weniger als 2000 aufweisen. Speziell können diese organischen Moleküle mindestens eine unverzweigte oder verzweigte Kohlenstoffkette aus mindestens 6 C-Atomen aufweisen und Tenside darstellen.

Die maximale Geschwindigkeit, mit der bei der Regeneration das organische Lösungsmittel über das Adsorberharz geleitet werden kann, hängt von der Viskosität des organischen Lösungsmittels ab. Wie vorstehend bereits erläutert, kann die Viskosität durch Vermischen verschiedener organischer Lösungsmittel und/oder durch Temperaturerhöhung auf einen technisch zweckmäßigen Bereich eingestellt werden. Vorzugsweise führt man das organische Lösungsmittel zur Regeneration mit einer Geschwindigkeit im Bereich von 1 bis 10 Bettvolumina pro Stunde, insbesondere im Bereich von 2 bis 6 Bettvolumina pro Stunde über das Adsorberharz. Dies kann im Gleichstrom oder im Gegenstrom zur vorangegangenen Beladung des Adsorberharzes erfolgen. Es kann technisch zweckmäßig sein, dass man die Beladung des Adsorberharzes durch Adsorption der organischen Moleküle aus Wasser im Abstrom und die Regeneration im Aufstrom durchführt.

Die Gesamtmenge an organischem Lösungsmittel, die man für einen Regenerationsschritt benötigt, hängt zum einen vom Typ des Adsorberharzes und zum anderen insbesondere von der Art der adsorbierten organischen Moleküle ab und muss empirisch bestimmt werden. Hierfür kann man beispielsweise aus dem ablaufenden organischen Lösungsmittel Proben entnehmen und dessen Beladung mit den desorbierten organischen Molekülen bestimmen. Die Regeneration kann dann abgebrochen werden, wenn die Konzentration der desorbierten organischen Moleküle in dem organischen Lösungsmittel eine vorgewählte Höchstgrenze unterschreitet.

Vorzugsweise führt man die Regeneration fraktioniert durch. Man erhält dann eine erste Fraktion von organischem Lösungsmittel, die sehr stark mit den desorbierten Tensichen beladen ist. Nachfolgende Fraktionen sind in immer geringerem Ausmaß mit desorbierten Tensid beladen. Man kann dann beispielsweise so weiter verfahren, dass man die erste Fraktion entsorgt oder wieder aufarbeitet und die nachfolgenden Fraktionen zur erneuten Regeneration eines beladenen Adsorberharzes einsetzt. Dies verringert die Gesamtmenge an organischem Lösungsmittel, die für eine Abfolge von Regenerationsschritten erforderlich ist.

In dieser wirtschaftlich besonders zweckmäßigen Verfahrensweise wird also das bei der Regeneration ablaufende organische Lösungsmittel in 2 oder mehr Fraktionen aufgefangen und mindestens eine Fraktion, die nicht mit dem vom Adsorberharze abgelösten organischen Molekülen gesättigt ist, bei der gerade stattfindenden oder einer nachfolgenden Regeneration des Adsorberharzes wieder verwendet.

Das mit den desorbierten organischen Molekülen beladene organische Lösungsmittel, bei fraktionierter Regeneration insbesondere dessen erste Fraktion, kann beispielsweise durch Verbrennen entsorgt werden. Wirtschaftlich zweckmäßiger kann es jedoch sein, dieses beladene organische Lösungsmittel von den desorbierten organischen Molekülen zu befreien und für nachfolgende Regenerationsschritte einzusetzen. Je nach Art der desorbierten organischen Moleküle kann dies beispielsweise durch Destillation oder durch Membranfiltration erfolgen.

In der Regel ist es zweckmäßig, das Adsorberharz nach der Regeneration mit dem organischen Lösungsmittel mit Spülwasser zu spülen, bevor es erneut zur Adsorption von organischen Molekülen aus Wasser eingesetzt wird. Dieser Spülschritt kann bei Umgebungstemperatur, jedoch auch bei erhöhter Temperatur erfolgen.

Zu Beginn der Regeneration verdrängt das organische Lösungsmittel das Wasser, das sich noch in dem Behältnis mit dem Adsorberharz befindet. Spült man nach der Regeneration mit Wasser nach, verdrängt andererseits das Spülwasser das organische Lösungsmittel aus dem Behältnis mit dem Adsorberharz. In beiden Fällen fallen Mischungen aus Wasser und organischem Lösungsmittel an. Daher ist es zweckmäßig, dass man das aus dem Adsorberharz auslaufende Lösungsmittel oder Spülwasser einer Phasentrennung in eine Wasserphase und eine Phase mit dem organischen Lösungsmittel unterwirft. Diese Phasentrennung kann beispielsweise durch Schwerkraft-Separation oder durch Zentrifugieren erfolgen. Die Phase des organischen Lösungsmittels kann je nach Sättigungsgrad mit den desorbierten organischen Molekülen entweder erneut zur Regeneration von Adsorberharz eingesetzt oder der Entsorgung oder Aufbereitung zugeführt werden. Die erhaltene Wasserphase kann man (wieder) mit dem Brauch-, Prozess- oder Abwasser vereinigen, das bei späteren Aufbereitungsschritten über das Adsorberharz geleitet werden soll. Oder man führt die Wasserphase der Abwasserbehandlung zu.

Das beschriebene erfindungsgemäße Verfahren hat gegenüber Verfahren aus dem Stand der Technik mehrere Vorteile: Es werden organische Lösungsmittel mit geringerem Dampfdruck und/oder höherem Flammpunkt eingesetzt als bisher im Stand der Technik bekannt. Die eingesetzten Lösungsmittel sind ungiftig und sind nur schwach Wasser gefährdend. Auf die Verwendung gefährlicher Chemikalien wie Wasserstoffperoxid kann verzichtet werden. Die einzusetzenden Lösungsmittel sind sehr effiziente Regenerationsmittel, so dass auf eine Unterstützung der Desorption beispielsweise durch Ultraschall verzichtet werden kann.

### Ausführungsbeispiele

Für die Adsorptions- und Regenerationsversuche wurde ein kommerzielles makroporöses Adsorberharz ohne funktionelle Gruppen auf Basis von vernetztem Polystyrol in Kugelform (Lewatit® V= OC 1064 MD PH, Firma Lanxess) verwendet. Das Harz hat laut Herstellerangaben eine spezifische Oberfläche von etwa 800 m²/g, ein Porenvolumen von etwa 1,2 cm³/g und einen mittleren Porendurchmesser von 5 - 10 nm.

### Beispiel 1

Das Adsorberharz (29,8 g in einer Säule mit einem Nassvolumen von 50 ml = Bettvolumen) wurde mit einer wässrigen Tensidlösung (Ethylenoxid/Propylenoxidaddukt eines C12-C18-Fettalkohols, Plurafac® LF 400 und Plurafac® LF 600; Konzentration: 35 mg/l) beladen. Hierzu wurde die Tensidlösung mit einer Geschwindigkeit von 20 - 21 Bettvolumina (= BV) pro Stunde durch die Adsorberharz-Säule geleitet. In regelmäßigen Zeitabständen wurden Proben der auslaufenden Tensidlösung gezogen, deren Tensidgehalt bestimmt und hieraus die auf dem Adsorberharz adsorbierte Tensidmenge berechnet. Nach einem Durchlauf von 4949 BV wurde erstmals ein Resttensidgehalt in dem auslaufenden Wasser festgestellt. Bis zu diesem Zeitpunkt hatte das Adsorberharz rechnerisch 7980 mg Tensid adsorbiert. Die Beladung wurde weiter fortgesetzt, bis insgesamt 7112 BV Tensidlösung über das Adsorberharz geleitet worden waren. Die auslaufende Lösung hatte zu diesem Zeitpunkt einen Tensidgehalt von 25,4 mg/l. Rechnerisch war das Adsorberharz mit 11723 mg Tensid beladen.

Die beladene Adsorberharz-Säule wurde anschließend mit technischem Propylencarbonat bei Raumtemperatur mit einer Durchfluss-Geschwindigkeit von 4,2 BV/h regeneriert. Jeweils ein BV (50 ml) Regenerat wurde aufgefangen und dessen Tensidgehalt bestimmt. Hieraus wurde die jeweils bis zur aktuellen Probe desorbierte Tensidmenge und der Regeneriergrad (% bezogen auf insgesamt adsorbierte Tensidmenge) bestimmt. Ergebnis:

| Regenerat-Fraktion | Tensidkonzentration (mg/50ml) | Desorbierte Gesamttensidmenge (mg) | Regeneriergrad (%) |
|---|---|---|---|
| 1 BV | 4196 | 4196 | 36 |
| 2 BV | 2713 | 6909 | 59 |
| 3 BV | 1430 | 8339 | 71 |
| 4 BV | 918 | 9257 | 79 |
| 5 BV | 646 | 9903 | 84 |
| 6 BV | 364 | 10267 | 88 |
| 7 BV | 209 | 10476 | 89 |
| 8 BV | 138 | 10613 | 91 |
| 9 BV | 128 | 10741 | 92 |

Es zeigt sich, dass bei einer Regeneration mit 5 BV Propylencarbonat bereits mehr als 80 %, bei 8 BV mehr als 90 % der adsorbierten Tensidmenge desorbiert worden waren.

### Beispiele 2 und 3, Vergleichsbeispiele

In einem Praxisversuch wurde Spülwasser nach der technischen Metallreinigung zur Adsorption der organischen Verbindungen, insbesondere der Tenside, über das Absorberharz geleitet. Die Reinigungslösung und damit auch das Spülwasser enthielt dieselbe Tensidmischung wie in Beispiel 1. Nach der Beladung wurde eine Harzprobe der Adsorberharz/Säule entnommen und mit unterschiedlichen Regeneriermitteln ausgewaschen. Die Bestimmung der in der Harzprobe nach Beladung bzw. nach Waschen mit den verschiedenen Regeneriermitteln noch enthaltenen Tensidmenge erfolgte durch Auswaschen mit Aceton. Hierzu wurde der Tensidgehalt im Aceton nach dem Auswaschen bestimmt. Die Ergebnisse sind in der nachfolgenden Tabelle zusammengestellt. Im Blindversuch wurden 50 ml Harz mit 365 ml Aceton ausgewaschen. Hierdurch wurde aus der Harzprobe 10092 mg Tensid desorbiert.

Im Vergleichsversuch 1 wurden 50 ml einer weiteren Harzprobe aus der gleichen Höhe der Säule zunächst mit H₂O₂ und anschließend mit Natronlauge gewaschen. Durch Nachwaschen mit Aceton wurde bestimmt, welche Menge an Tensid noch aus der Harzprobe desorbierbar war. Mit Aceton ließen sich noch 9757 mg Tensid auswaschen. Dies bedeutet, dass sich durch Behandlung mit H₂O₂ und Natronlauge nur wenig Tensid von dem Adsorberharz desorbieren ließ.

Entsprechend wurde im Vergleichsversuch 2 verfahren, wobei die Harzprobe zunächst mit Peressigsäure und dann mit Natronlauge ausgewaschen wurde. Das nachfolgende Auswaschen mit Aceton ergab, dass noch 9821 mg Tensid durch Aceton desorbierbar waren. Durch die Behandlung mit Peressigsäure gefolgt von Natronlauge hat sich also der Tensidgehalt der Harzprobe nur unwesentlich verringert.

Beispiel 2 zeigt demgegenüber, dass bei der Desorption mit Propylencarbonat, gefolgt von einer Nachspülung mit voll entsalztem Wasser, mit Aceton nur noch 691 mg Tensid aus der Harzprobe eluierbar waren. Durch die beispielsgemäße Regeneration mit Propylencarbonat war demnach ein Großteil des Tensids vom Adsorberharz desorbiert worden.

Beispiel 3 zeigt einen Regenerierversuch mit Ethylencarbonat, gefolgt von einer Nachspülung mit voll entsalztem Wasser. Nach dieser Behandlung ließen sich mit Aceton noch 4148 mg Tensid aus der Harzprobe eluieren. Durch die Regeneration mit Ethylencarbonat hat sich demnach der Tensidgehalt des Adsorberharzes um mehr als die Hälfte verringert.

Diese Versuche belegen die Wirksamkeit von Ethylencarbonat und insbesondere von Propylencarbonat zur Regenerierung des Tensid-beladenen Adsorberharzes. Gegenüber Aceton als ebenfalls sehr gutem Regenerierungsmittel haben die genannten Alkylencarbonate den Vorteil des geringeren Dampfdrucks und der wesentlich geringeren Entflammbarkeit.

| Beispiel | Regeneriermittel | Menge (ml) | Mit Aceton auswaschbarer Rest-Tensidanteil (mg / 50 ml Harz) |
|---|---|---|---|
| Blindversuch | Aceton | 365 | 10092 |
| Vergl. 1 | H₂O₂ 5 %ig | 330 | 9757 |
| | NaOH 4 %ig | 460 | |
| | Aceton | 325 | |
| Vergl. 2 | Peressigsäure 5 %ig | 350 | 9821 |
| | NaOH 4 %ig | 450 | |
| | Aceton | 336 | |
| Beisp. 2 | Propylencarbonat | 290 | 691 |
| | Vollentsalztes Wasser | 186 | |
| | Aceton | 350 | |
| Beisp. 3 | Ethylencarbonat | 245 | 4148 |
| | Vollentsalztes Wasser | 202 | |
| | Aceton | 350 | |

## Patentansprüche

1. Verfahren zum Regenerieren eines mit organischen Molekülen beladenen Adsorberharzes, wobei man das Adsorberharz mit einem organischen Lösungsmitteln spült, das **dadurch gekennzeichnet dass** das organische Lösungsmittel zu mindestens 70 Gew.-% aus einem oder mehreren Alkylencarbonaten besteht und dass das Adsorberharz mit organischen Molekülen beladen ist, die eine Molmasse von oberhalb 70, vorzugsweise von oberhalb 100 und insbesondere oberhalb von 150 und vorzugsweise weniger als 2000 g/mol aufweisen und die organischen Moleküle mindestens eine unverzweigte oder verzweigte Kohlenstoffkette aus mindestens 6 C-Atomen aufweisen und Tenside darstellen.

2. Verfahren nach Anspruch 1, **dadurch gekennzeichnet, dass** das organische Lösungsmittel zu mindestens 90 Gew.-% aus einem oder mehreren Alkylencarbonaten besteht.

3. Verfahren nach einem oder beiden der Ansprüche 1 und 2, **dadurch gekennzeichnet**, das das Alkylencarbonat oder die Alkylencarbonate mindestens 3 C-Atome in der Alkylengruppe aufweisen.

4. Verfahren nach einem oder mehreren der Ansprüche 1 bis 3, **dadurch gekennzeichnet, dass** man die Regeneration bei einer Temperatur im Bereich von 15 °C bis zu einer Temperatur, die um 15 °C unter dem Flammpunkt des verwendeten organischen Lösungsmittels liegt, durchführt.

5. Verfahren nach einem oder mehreren der Ansprüche 1 bis 4, **dadurch gekennzeichnet, dass** das Adsorberharz eine nach der BET Methode bestimmbare Oberfläche im Bereich von 500 bis 1500 m²/g, vorzugsweise im Bereich von 700 bis 900 m²/g aufweist.

6. Verfahren nach einem oder mehreren der Ansprüche 1 bis 5, **dadurch gekennzeichnet, dass** man das Adsorberharz mit einer Geschwindigkeit im Bereich von 1 bis 10 Bettvolumina pro Stunde, vorzugsweise im Bereich von 2 bis 6 Bettvolumina pro Stunde, regeneriert.

7. Verfahren nach einem oder mehreren der Ansprüche 1 bis 6, **dadurch gekennzeichnet, dass** das bei der Regeneration ablaufende organische Lösungsmittel in zwei oder mehr Fraktionen aufgefangen wird und mindestens eine Fraktion, die nicht mit den vom Adsorberharz abgelösten organischen Molekülen gesättigt ist, bei der gerade stattfindenden oder einer nachfolgenden Regeneration des Adsorberharzes wieder verwendet wird.

8. Verfahren nach einem oder mehreren der Ansprüche 1 bis 7, **dadurch gekennzeichnet, dass** man das Adsorberharz nach der Regeneration mit Spülwasser spült.

9. Verfahren nach einem oder mehreren der Ansprüche 1 bis 8, **dadurch gekennzeichnet, dass** man das aus dem Adsorberharz auslaufende Lösungsmittel oder Spülwasser einer Phasentrennung unterwirft.

## Claims

1. Process for regenerating a scavenger charged with organic molecules, where the scavenger is rinsed with an organic solvent, that is **characterised by** the fact that the organic solvent consists of at least 70% weight of one or several alkylene carbonates and that the scavenger is charged with organic molecules that have a molar mass of more than 70, preferably more than 100 and, in particular, more than 150 and preferably less than 2,000 g/mol as well as the organic molecules having at least one unbranched or branched chain of carbon consisting of at least 6 C atoms and representing tensides.

2. Process in accordance with claim 1, **characterised by** the fact that the organic solvent consists of one or several alkylene carbonates of at least 90% weight.

3. Process in accordance with one or both of the claims 1 and 2, **characterised by** the fact that the alkylene carbonate or the alkylene carbonates have at least 3 C-atoms in the alkylene group.

4. Process in accordance with one or several of the claims from 1 through to 3, **characterised by** the fact that regeneration is carried out at a temperature in the range of 15°C to a temperature that is 15°C below the flash point of the organic solvent used.

5. Process in accordance with one or several of the claims from 1 through to 4, **characterised by** the fact that the scavenger has a surface that can be determined according to the BET method in the range of 500 to 1,500 m²/g, preferably in the range of 700 to 900 m²/g.

6. Process in accordance with one or several of the claims from 1 through to 5, **characterised by** the fact that the scavenger is regenerated at a speed in the range of 1 to 10 bed volumes per hour, preferably in the range of 2 to 6 bed volumes per hour.

7. Process in accordance with one or several of the claims from 1 through to 6, **characterised by** the fact that the organic solvent draining off at regeneration is collected in two or several fractions and at least one fraction that is not saturated with the organic molecules stripped from the scavenger is used again with the regeneration taking place now, or a subsequent regeneration of the scavenger.

8. Process in accordance with one or several of the claims from 1 through to 7, **characterised by** the fact that the scavenger is rinsed with rinsing water after regeneration.

9. Process in accordance with one or several of the claims from 1 through to 8, **characterised by** the fact that the solvent or rinsing water draining from the scavenger is subjected to phase separation.

## Revendications

1. Procédé de régénération d'une résine adsorbante chargée de molécules organiques, par lequel la résine adsorbante est rincée avec un solvant organique, **caractérisé en ce que** le solvant organique se compose à au moins 70 %m d'un ou de plusieurs carbonates d'alkylène et **en ce que** la résine adsorbante est chargée de molécules organiques dont la masse molaire est supérieure à 70, de préférence supérieure à 100 et idéalement supérieure à 150 et de préférence inférieure à 2000 g/mol, et **en ce que** ces molécules organiques présentent au moins une chaine carbonée ramifiée ou non ramifiée d'au moins 6 atomes C et constituent des tensioactifs.

2. Procédé selon la revendication 1, **caractérisé en ce que** le solvant organique se compose à au moins 90 %m d'un ou de plusieurs carbonates d'alkylène.

3. Procédé selon l'une des, ou selon les deux, revendications 1 et 2, **caractérisé en ce que** le carbonate d'alkylène ou les carbonates d'alkylène présentent au moins 3 atomes C du groupe alkylène.

4. Procédé selon l'une ou plusieurs des revendications 1 à 3, **caractérisé en ce que** l'on réalise la régénération à une température située dans une échelle entre 15 °C et une température située à 15 °C sous le point de flamme du solvant organique utilisé.

5. Procédé selon l'une ou plusieurs des revendications 1 à 4, **caractérisé en ce que** la résine adsorbante présente une surface, déterminée selon la méthode BET, située dans une échelle entre 500 et 1500 m²/g, de préférence dans une échelle entre 700 et 900 m²/g.

6. Procédé selon l'une ou plusieurs des revendications 1 à 5, **caractérisé en ce que** l'on régénère la résine adsorbante à une vitesse située dans une échelle entre 1 et 10 volumes de lit par heure, de préférence entre 2 et 6 volumes de lit par heure.

7. Procédé selon l'une ou plusieurs des revendications 1 à 6, **caractérisé en ce que** le solvant organique s'écoulant au cours de la régénération est recueilli en deux ou plusieurs fractions, et **en ce qu'**au moins une fraction n'ayant pas été saturée par les molécules organiques détachées de la résine adsorbante est à nouveau utilisée lors de la régénération précisément en cours ou lors d'une prochaine régénération de la résine adsorbante.

8. Procédé selon l'une ou plusieurs des revendications 1 à 7, **caractérisé en ce que** l'on rince la résine adsorbante à l'eau de rinçage après la régénération.

9. Procédé selon l'une ou plusieurs des revendications 1 à 8, **caractérisé en ce que** l'on soumet le solvant organique ou l'eau de rinçage s'écoulant de la résine adsorbante à une séparation de phases.
